# EUROPÄISCHE PATENTANMELDUNG

(11) **EP 1 788 463 A2**
(43) Veröffentlichungstag der Anmeldung: **23.05.2007**
(21) Anmeldenummer: 06123050.4
(22) Anmeldetag: 27.10.2006
(51) Int. Cl.: G05B 19/042

(54) **Anzeigeeinheit für die Prozessautomatisierungstechnik**

(30) Priorität: 27.10.2005 DE 102005051795
(71) Anmelder: Endress+Hauser Wetzer GmbH+CO. KG, 87484 Nesselwang (DE)
(72) Erfinder: Korn, Michael, 87616 Marktoberdorf (DE); Buchner, Reinhard, 87484 Nesselwang (DE)
(74) Vertreter: Andres, Angelika Maria

(57) **Zusammenfassung**

Eine Anzeigeeinheit für die Automatisierungstechnik, die über eine 2-Leiter-Stromschleife mit Energie versorgt wird, weist einen Mikrocontroller µC auf, in dem das digitale Stromsignal ausgewertet wird, auf. Der Mikrocontroller µC steuert ein Anzeigeelement AE an, das zur Darstellung des aktuelle Messwerts und der zugehörigen Statusinformation dient. Die Anzeigeeinheit A, die auch zur Darstellung von Statusinformationen dient, kann einfach in vorhandene Stromschleifen L integriert werden.

## Beschreibung

Die Erfindung betrifft eine Anzeigeeinheit für die Prozessautomatisierungstechnik.

In der Prozessautomatisierungstechnik werden vielfach Feldgeräte eingesetzt, die zur Erfassung und / oder Beeinflussung von Prozessvariablen dienen. Beispiele für derartige Feldgeräte sind Füllstandsmessgeräte, Massendurchflussmessgeräte, Druck- und Temperaturmessgeräte, pH-Redoxpotential- Messgeräte, Leitfähigkeitsmessgeräte etc., die als Sensoren die entsprechenden Prozessvariablen Füllstand, Durchfluss, Druck, Temperatur, pH-Wert bzw. Leitfähigkeitswert erfassen.

Zur Beeinflussung von Prozessvariablen dienen so genannte Aktoren, z. B. Ventile, die den Durchfluss einer Flüssigkeit in einem Rohrleitungsabschnitt steuern oder Pumpen, die den Füllstand in einem Behälter ändern.

Eine Vielzahl solcher Feldgeräte wird von der Firma Endress+Hauser® hergestellt und vertrieben.

Häufig sind Feldgeräte mit übergeordneten Einheiten z. B. Leitsystemen oder Steuereinheiten verbunden. Diese übergeordneten Einheiten dienen zur Prozesssteuerung, Prozessvisualisierung, Prozessüberwachung.

Die Signalübertragung zwischen Feldgeräten und übergeordneten Einheiten erfolgt häufig nach dem bekannten 4-20 mA Standard mittels einer 2-Leiter-Stromschleife.

Handelt es sich bei den Feldgeräten um Sensoren, so werden die von ihnen erfassten Messwerte als Stromsignal über eine Signalleitung an die übergeordneten Einheiten übertragen. Der Messbereich der Sensoren wird dabei linear auf ein 4-20 mA Stromsignal abgebildet.

Die Messwerte der Sensoren können so mit einem einfachen Zeigerinstrument leicht an einer beliebigen Stelle der Stromschleife dargestellt werden.

Vielfach erfolgt die Energieversorgung der Feldgeräte auch über das 4-20 mA Stromsignal, so dass neben der 2-Leiter-Stromschleife keine weitere Versorgungsleitung notwendig ist.

Normalerweise wird dieses Stromsignal nicht in der übergeordneten Einheit sondern in einem getrennten Messumformerspeisegerät, das mit der Signalleitung (2-Leiter-Stromschleife) verbunden ist, erzeugt.

Für den Einsatz von Feldgeräten im Ex-Bereich sind gewisse Maßnahmen im Hinblick auf die Eigensicherheit notwendig. So erfolgt eine galvanische Trennung bei der Übertragung der Signale zwischen dem Leitsystem, das im sicheren Bereich angeordnet ist, und dem Feldgerät, das im eigensicheren Bereich angeordnet ist. In der Regel erfolgt die galvanische Trennung ebenfalls im Messumformerspeisegerät.

Intelligente Feldgeräte besitzen teilweise umfangreiche Diagnosefunktionalitäten, die z. B. die Belastungen von Sensoren bzw. Aktoren auswerten, Wartungszeitpunkte ermitteln und den Anwender auf die Gefahr eines baldigen Ausfalls des Feldgeräts hinweisen.

Solche Zusatzinformationen über den aktuellen Zustand eines Sensors können mit der herkömmlichen 4-20 mA Technik, die nur eine analoge Übertragung von Messwerten erlaubt, nicht in vollem Umfang* übertragen werden.

Über eine 4-20mA Kommunikation kann ein einfacher Status (Gerät geht oder geht nicht) durch Fehlerstrombereiche übertragen werden (Namur NE43), allerdings ist gleichzeitig keine Messwertübertragung mehr möglich.

Eine Möglichkeit verschieden Daten vom Feldgerät ans Leitsystem zu übertragen, bietet der HART-Standard. Hierbei wird ein alternierendes Stromsignal zur Übertragung der digitalen Daten erzeugt, das einem Gleichstrom, überlagert wird.

Meist werden Zusatzinformationen und Messwerte zusammen in digitaler Form übertragen.

Die Kommunikation zwischen Feldgeräten und Leitsystemen erfolgt bei dem HART-Standard nach dem Master Slave Prinzip, wobei Feldgeräte immer als Slaves fungieren. Von sich aus kann ein Feldgerät somit keine Zusatzinformationen an Leitsysteme übermitteln.

Wie bereits erwähnt sind Anzeigegeräte bekannt, die das von einem Sensor erzeugte analoge Stromsignal als Zeigerauschlag anzeigen. Mit diesen einfachen Zeigergeräten können jedoch keine Zusatzinformationen angezeigt werden.

Herkömmliche Anzeigeeinheiten mit einer digitalen Anzeigeeinheit für HART-Signale benötigen aber eine zusätzliche Spannungsversorgung.

Aufgabe der Erfindung ist es, eine Anzeigeeinheit zu schaffen, die an einer beliebigen Stelle einer 2-Leiter-Stromschleife Daten eines Feldgeräts anzeigt und die keine separate Stromversorgung benötigt.

Gelöst wird diese Aufgabe durch die im Anspruch 1 angegebenen Merkmale.

Vorteilhafte Weiterentwicklungen der Erfindung sind in den Unteransprüchen angegeben.

Die wesentliche Idee der Erfindung besteht darin, eine Anzeigeeinheit mit einem Mikrocontroller auszustatten, der das digitale Stromsignal auswertet und so den aktuellen Messwert und den Statuswert des Feldgerätes bestimmt und der ein Anzeigeelement ansteuert, das zur Darstellung dieser Werte dient. Die Anzeigeeinheit ist so ausgebildet, dass sie keine zusätzliche Energieversorgung benötigt.

In einer vorteilhaften Weiterentwicklung der Erfindung erfolgt die Kommunikation über eine 2-Leiter-Stromschleife nach dem HART-Standard.

In einer vorteilhaften Weiterentwicklung der Erfindung ist an der Anzeigeeinheit ein Schaltkontrakt vorgesehen, der in Abhängigkeit des Messwertes oder der Statusinformation angesteuert wird.

Nachfolgend ist die Erfindung anhand eines in der Zeichnung dargestellten Ausführungsbeispiels näher erläutert.

Es zeigen:

Fig.1 Blockschaltbild einer einer 2-Leiter-Stromschleife mit einer Anzeigeeinheit;

Fig. 2 Blockschaltbild einer erfindungsgemäßen Anzeigeeinheit.

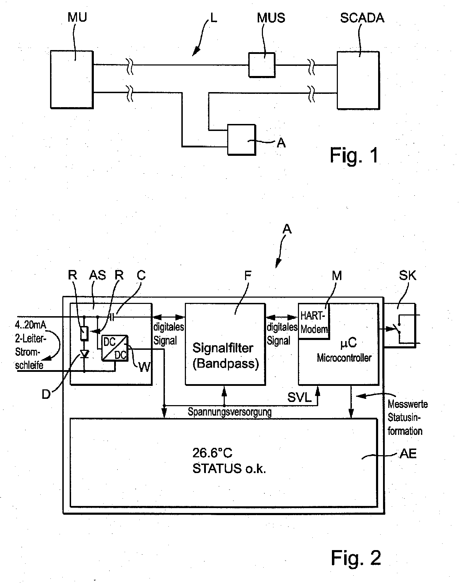

In Fig.1 sind ein Messumformerspeisegerät MUS, ein Messumformer MU und ein Visualisierungssystem SCADA (z.B. P View, Fa. Endress+Hauser), das als übergeordnete Einheit dient, schematisch dargestellt. Bei dem Messumformer MU kann es sich zum Beispiel um einen Temperatursensor TMT 162 der Firma Endress+Hauser handeln.

Messumformer MU, Messumformerspeisegerät MUS und Visualisierungssystem SCADA sind über eine Signalleitung L miteinander verbunden. Die Signalleitung L dient als 2-Leiter-Stromschleife, bei der Messwerte des Messumformers MU als HART-Signale an das Leitsystem übertragen werden.

Mit der 2-Leiter-Stromschleife ist die erfindungsgemäße Anzeigeeinheit A verbunden, die in Fig. 2 näher dargestellt ist.

Die Anzeigeeinheit A besteht im Wesentlichen aus einer Anschlusseinheit AS, die mit der 2-Leiter-Stromschleife verbunden ist, einem Signalfilter F und einem Mikrocontroller µC sowie einem Anzeigeelement AE.

Über einen Kondensator C in der Anschlusseinheit AS wird das digitale Stromsignal ausgekoppelt und dem Signalfilter F zugeführt. Nach der Filterung wird das Signal an den Mikrocontroller µC, in dem softwaretechnisch ein HART-Modem M integriert ist, weitergeleitet.

Über einen Gleichstromwandler W, der parallel zu einer Diode D und einem Widerstand R geschaltet ist, wird der zum Betrieb der einzelnen Einheiten der Anzeigeeinheit A notwendigen Gleichstrom ausgekoppelt. Jede der einzelnen Komponenten ist deshalb über eine Spannungsversorgungsleitung SVL mit dem Gleichstromwandler W verbunden Der Mikrocontroller µC steuert das Anzeigeelement AE an, das als LCD-Display ausgeführt ist.

Neben dem reinen Messwert "26,6 °C" wird gleichzeitig der Zustand des Messumformers MU, der in diesem Falle "Status o.k." ist, am Anzeigeelement AE angezeigt.

Somit erlaubt die Anzeigeeinheit A in einfacher Weise neben der Darstellung des Messwerts auch die Darstellung der zugehörigen Statusinformation.

Wie bereits erläutert, handelt es sich bei dem digitalen Stromsignal um Daten, die entsprechend dem HART-Protokoll übertragen werden.

In der Regel ist das Visualisierungssystem SCADA als primary Master ausgelegt. In diesem Fall kann die Anzeigeeinheit A nur als secondary Master konfiguriert werden.

Das HART-Protokoll sieht 2 Byte zur Kodierung von den Statusinformationen des Messumformers MU vor. Diese Information wird bei jeder Antwort des Messumformers auf eine Anfrage, die vom primary oder secondary Master stammt, mit übertragen. Je nach Zustand des Messumformers MU kann diese Statusinformation unterschiedlich abgestuft sein. Stufe 0: o.k.; Stufe 1: Überprüfung empfohlen; Stufe 2: Überprüfung erforderlich; Stufe 3: Überprüfung dringend empfohlen; Stufe 4: Messwert risikobehaftet. Die messumformerspezifische Zuordnung von Zuständen zu den einzelnen Stufen erfolgt durch den Messumformer MU selbst und kann ggfs. vom Anwender entsprechend konfiguriert werden. Zum Beispiel kann nach einer bestimmten Betriebszeit die Statusinformation die Stufe 1 "Überprüfung empfohlen" annehmen oder in einem anderen Fall abhängig von der prozessbedingten Belastung des Messumformers MU die Stufe 3 Überprüfung erforderlich erreicht werden.

In der Anzeigeeinheit A kann dann entsprechend der Stufe der Statusinformation eine entsprechende Warnung über den Schaltkontakt SK dem Anwender signalisiert werden. Denkbar ist auch neben dem Schaltkontakt SK weitere Schaltkontakte vorzusehen.

Die erfindungsgemäße Anzeigeeinheit A kann in einfacher Weise in bestehende 2-Leiter-Stromschleifen integriert werden, um sowohl den Messwert als auch die Statusinformation eines Sensors anzuzeigen.

## Patentansprüche

1. Anzeigeeinheit für die Automatisierungstechnik, die mit einer 2-Leiter-Stromschleife verbindbar ist, wobei über die 2-Leiter-Stromschleife Messwerte und Statusinformationen eines Messumformers als digitale Stromsignale übertragen werden, **dadurch gekennzeichnet, dass** die Anzeigeeinheit A über die 2-Leiterstromschleife L mit Energie versorgt wird und einen Mikrocontroller µC aufweist, in dem das digitale Stromsignal ausgewertet wird und der ein Anzeigeelement AE ansteuert, das zur Darstellung des aktuelle Messwerts und der zugehörigen Statusinformation dient.

2. Anzeigeeinheit nach Anspruch 1, **dadurch gekennzeichnet, dass** die Kommunikation über die 2-Leiter-Stromschleife L dem HART-Standard entspricht.

3. Anzeigeeinheit nach einem der vorhergehenden Ansprüche, **dadurch gekennzeichnet, dass** in der Anzeigeeinheit A mindestens ein Schaltkontakt SK vorgesehen ist, der in Abhängigkeit des Messwerts oder der Statusinformationen vom Mikrocontroller µC angesteuert wird.
